# EUROPÄISCHE PATENTSCHRIFT

(11) **EP 2 921 088 B1**
(45) Veröffentlichungstag und Bekanntmachung des Hinweises auf die Patenterteilung: **23.08.2017**
(21) Anmeldenummer: 15158142.8
(22) Anmeldetag: 09.03.2015
(51) Int. Cl.: A47J 31/46

(54) **HEISSGETRÄNKEZUBEREITUNGSEINRICHTUNG FÜR HAUSHALTSZWECKE**
HOT BEVERAGE PREPARATION DEVICE FOR DOMESTIC USE
DISPOSITIF DE PRÉPARATION DE BOISSONS CHAUDES À DES FINS DOMESTIQUES

(30) Priorität: 20.03.2014 DE 102014205264
(43) Veröffentlichungstag der Anmeldung: 23.09.2015
(73) Patentinhaber: BSH Hausgeräte GmbH, 81739 München (DE)
(72) Erfinder: Kirschner, Andreas, 83301 Traunreut (DE); Ostermaier, Albert, 83371 Stein a.d. Traun (DE)

(56) Entgegenhaltungen:
- WO-A1-95/23545
- DE-U1-202005 011 203

## Beschreibung

Die Erfindung betrifft eine Heißgetränkezubereitungseinrichtung für Haushaltszwecke, insbesondere einen Kaffeevollautomaten.

Üblicherweise wird der Kaffee bzw. Espresso in einer Brüheinheit aufgebrüht und über einen Auslauf auf zwei Tassen verteilt. Dabei kommt es unter Verwendung von aus der Praxis bekannten Espressomaschinen häufig zur Bildung von größeren Luftblasen, die eine gleichmäßige Verteilung auf die Tassen stören und einen kontinuierlichen Ausfluss der Flüssigkeit verhindern, indem sie die Auslauföffnungen blockieren.

Die WO-A-95/23545 beschreibt eine Heißgetränkezubereitungseinrichtung für Haushaltszwecke mit einem Auslauf, welcher einen Zulauf und mehrere Teilausläufe umfasst. Die Teilausläufe weisen stufenförmige Vergrößerungen ihres Querschnitts auf. Der Auslauf ist drehbar gelagert. In unterschiedlichen Drehstellungen können Getränke aus unterschiedlichen oder unterschiedlich vielen Teilausläufen bezogen werden.

Die DE 20 2005 011 203 U1 beschreibt einen Auslaufverteiler für Espressomaschinen, mit einem gemeinsamen Kaffeeeinlauf und wenigstens zwei mit diesem strömungsmäßig in Verbindung stehenden Teilauslauföffnungen sowie mit stromaufwärts der Teilauslauföffnungen angeordneten Strömungsberuhigungsmitteln, wobei zwei von dem gemeinsamen Kaffeeeinlauf abgezweigte Teilauslaufleitungen je einen offenen Endabschnitt aufweisen, der in je einer Prallkammer gegen eine Prallwand gerichtet ist, und dass je eine der Prallkammern in jeweils einem Auslaufkörper ausgebildet ist, der im Abstand unterhalb der Prallwand eine der Teilauslauföffnungen aufweist.

Es ist daher Aufgabe der vorliegenden Erfindung, eine Heißgetränkezubereitungseinrichtung mit einer einfachen Geometrie des Auslaufs anzugeben, mit der ein weitgehend blasenfreier Bezug eines Kaffeegetränks möglich ist.

Diese Aufgabe wird durch eine Heißgetränkezubereitungseinrichtung gemäß Patentanspruch 1 gelöst.

Eine eingangs genannte Zubereitungseinrichtung umfasst einen Getränkeauslauf, der einen von einer Brüheinrichtung gespeisten Zulauf und eine Anzahl von Teilausläufen umfasst. Die Teilausläufe bilden eine fluidische Verbindung zwischen dem Zulauf und je einer Teilauslauföffnung, über die das zubereitete Getränk die Zubereitungseinrichtung in Richtung eines Getränkegefäßes verlässt. Die Teilausläufe weisen erfindungsgemäß jeweils in Richtung ihrer Teilauslauföffnung und bis zu ihnen hin einen monoton zunehmenden Durchflussquerschnitt auf. Die Teilauslauföffnungen selber, aber auch nur sie, können einen reduzierten Durchflussquerschnitt bieten. Die Zunahme des Durchflussquerschnitts kann kontinuierlich ausgebildet sein, erfolgt vorteilhafterweise aber stufenförmig.

Die Zubereitungseinrichtung kann eine Kaffee- oder Espressomaschine sowie insbesondere eine vollautomatisierte Maschine zur Zubereitung dieser und anderer Heißgetränke sein. Das gewünschte Getränk wird in einer Brüheinheit dieser Einrichtung zubereitet, die über den Zulauf mit dem Getränkeauslauf fluidisch verbunden ist. Ein geeignetes Kopplungselement des Auslaufs teilt hinter dem Zulauf den hergestellten Flüssigkeitsstrom auf eine Anzahl von - typischerweise zwei - Teilausläufen auf. Es können aber auch nur einer oder mehr als zwei Teilausläufe ausgebildet sein. Durch die Teilausläufe gelangt das fertige Getränke über die Teilauslauföffnungen aus der Zubereitungseinrichtung in ein Getränkegefäß.

Als Durchflussquerschnitt wird die Fläche senkrecht zur Fließrichtung bezeichnet, die im Volumen des Auslaufs tatsächlich von der Flüssigkeit eingenommen werden kann. Der Begriff monoton wird im mathematischen Sinn gebraucht. Der Querschnitt im gesamten Teilauslauf - ggf. mit Ausnahme der Teilauslauföffnungen - bleibt entweder gleich oder nimmt zu, jedoch niemals ab. Die Zunahme erfolgt zwar insbesondere stufenförmig, also abrupt an einer beliebigen Anzahl von Stellen; es können aber genauso gut auch beispielsweise konisch größer werdende Abschnitte vorkommen. Vermieden wird auf jeden Fall, dass der Durchflussquerschnitt kleiner wird, jedenfalls solange kein Atmosphärendruck herrscht, da dies aufgrund der zufließenden Flüssigkeit aus der Brüheinheit zu einer Druckerhöhung führen würde, die sich nachteilig auf Konsistenz und Qualität der Crema auswirkt.

Die stufenförmige Zunahme ist besonders vorteilhaft, da die Hülle der Blasen, deren volumenbedingter Querschnitt den Auslaufquerschnitt ausfüllt, an diesen Stufen haften bleibt. Sukzessive erhöht sich die Oberflächenspannung im vorderen Bereich der Blasenhülle immer mehr, je weiter die Blase von der nachfließenden Flüssigkeit vorgeschoben wird. Bis die Hülle der Spannung schließlich nicht mehr standhält und die Blase platzt. Vor allem die stufenförmige Ausbildung der Teilausläufe führt also zu einem Platzen großer Blasen, so dass eine feinblasige Crema übrigbleibt.

Eine erfindungsgemäße Zubereitungseinrichtung verhindert somit vorteilhafterweise, dass Blasen eine Ausflussöffnung blockieren, an der Teilauslauföffnung zerplatzen oder in den Kaffee bzw. Espresso gelangen. Gleichzeitig wird die Konsistenz und Qualität der Crema dadurch erhalten, dass der Auslauf keine Engpässe aufweist, die den Druck nachteilig erhöhen. Um dies zu erreichen, wird im Gegensatz zum Stand der Technik keine voluminöse oder geometrisch komplizierte Vorrichtung verwendet, sondern eine vergleichsweise einfache und damit leicht zu fertigende Ausflussgeometrie.

In einer vorteilhaften Ausgestaltungsform der erfindungsgemäßen Zubereitungseinrichtung beträgt ein Vergrößerungsfaktor bei einer stufenförmigen Vergrößerung des Querschnitts mindestens 10%. Der Vergrößerungsfaktor stellt den Quotienten aus dem Querschnitt vor der Stufe und demjenigen nach der Stufe dar. Denn ab diesem Faktor wird effektiv verhindert, dass die Blasen mit ihrer Hülle hinter der Stufe an den Wänden des neuen Abschnitts mit größerem Querschnitt in Kontakt kommen können und somit weitergeleitet würden. Durch diese Wirkung der Stufe werden die Blasen vorteilhafterweise in der oben geschilderten Weise zerstört.

Nach einer weiteren vorteilhaften Ausgestaltungsform der Erfindung verbindet ein Kopplungselement einer erfindungsgemäßen Zubereitungseinrichtung den Zulauf mit dem jeweiligen Teilauslauf so, dass zwischen Kopplungselement und Teilauslauf eine stufenförmige Vergrößerung des Querschnitts ausgebildet ist. Beispielsweise kann ein am Kopplungselement ausgebildetes Spitzende mit vergleichsweise kleinem Leitungsquerschnitt in einen Steckanschluss bzw. eine Muffe des jeweiligen Teilauslaufs eingeführt werden, der bzw. die einen größeren Durchflussquerschnitt aufweist. Auf diese Weise kann bereits eine derartige Steckverbindung eine vorteilhafte Zerstörung der Blasen bewirken.

Erfindungsgemäß umfassen die Teilausläufe eine erste Ausgleichskammer zur Phasenseparierung, die zwischen Zulauf und Teilauslauf angeordnet und mit diesen fluidisch verbunden ist. Zusätzlich umfassen sie eine zweite Ausgleichskammer als Überlaufreservoir der ersten Ausgleichskammer, die über eine Drosselbohrung mit der ersten Ausgleichskammer verbunden ist. Die beiden Kammern und die sie verbindende Drosselbohrung sind so angeordnet, dass eine Flüssigkeit aus der zweiten Ausgleichskammer in die erste Ausgleichskammer abfließen kann.

Die erste Ausgleichskammer wird bei der Getränkezubereitung in jedem Fall durchflossen. Sie stellt ein Volumen bereit, in dem sich die Flüssigkeit vor der Auslauföffnung anstauen kann. Deshalb weist sie vorzugsweise einen größeren Querschnitt auf als die vorhergehenden Abschnitte des Teilauslaufs. Dadurch bleibt es bei der bevorzugten stufenweisen Zunahme des Querschnitts und somit vorteilhaft bei einer zerstörenden Wirkung auf die Blasen.

In der ersten Ausgleichskammer findet eine Phasenseparierung des zubereiteten Getränkes statt. Sie endet in einer der Teilsauflussöffnungen, die den einzigen geringeren Durchflussquerschnitt stromab des Zulaufs darstellen. Staut sich das Getränk vor der Ausflussöffnung, so trennen sich die einzelnen Phasen aufgrund ihres Dichteunterschiedes und den daraus resultierenden unterschiedlichen Auftriebskräften. Während beispielsweise die Kaffeeflüssigkeit herabsinkt und als erstes ausfließt, setzt sich in einer Schicht darüber die Crema ab. Eventuell erhalten gebliebene Blasen steigen sogar noch weiter auf, sodass sie den Auslauf nicht blockieren. Besonders vorteilhaft ist daran, dass das Getränk auch bei ungleichmäßigem Zustrom aus dem Zulauf in einem gleichmäßigen Flüssigkeitsstrom in das Getränkegefäß gelangt. Außerdem fließt es gleich in seiner finalen Schichtung aus, und die Phasenseparierung findet nicht erst im Trinkgefäß statt.

Die Drosselbohrung, die die erste mit der zweiten Ausgleichskammer verbindet, wirkt vorteilhafterweise ebenfalls zerstörend auf die Blasen und somit einer unkontrollierten Schaumbildung entgegen. Die zweite Ausgleichskammer dient im Fall großer Flüssigkeitsmengen oder bei unerwartet starker Blasenbildung als Überlaufschutz, wenn die erste Kammer kein Flüssigkeitsvolumen mehr aufnehmen kann. Sie erfüllt dabei eine Pufferfunktion, sodass in einem gewissen Toleranzbereich trotz der eben genannten Komplikationen weiterhin einwandfreie Getränke ausgegeben werden und gleichzeitig vermieden wird, dass Flüssigkeit in andere, nicht intendierte Bereiche der Zubereitungseinrichtung gelangen kann.

Nach einer weiteren vorteilhaften Ausgestaltungsform der Erfindung weist die zweite Ausgleichskammer oberseitig eine zweite Drosselbohrung auf, die zum Druckausgleich mit der Umgebung ausgebildet ist. Dies ist wichtig, da eine Druckerhöhung die Qualität der Crema negativ beeinflusst. Das Stauen des Getränks in der ersten Ausgleichskammer erfolgt wegen der Drosselbohrung somit unter dem Druck der umgebenden Atmosphäre, also vorteilhafterweise ohne Druckerhöhung.

Nach einer dazu alternativen vorteilhaften Ausgestaltungsform der Erfindung weist die zweite Ausgleichskammer oberseitig ein Schwimmerventil auf, das zum Druckausgleich mit der Umgebung ausgebildet ist und für Flüssigkeiten sperrt. Das Ventil dient dem oben bereits beschriebenen Druckausgleich und als Schutzmechanismus gegen das Austreten von Flüssigkeit aus der zweiten Ausgleichskammer. Denn Gas, insbesondere die Luft aus zerplatzen Blasen, kann durch das Ventil austreten. Sollte aber die Flüssigkeit auch die zweite Ausgleichskammer füllen, schwimmt ein Schwimmer des Schwimmerventils auf der Flüssigkeit auf, wird gegen einen Ventilsitz gedrückt und dichtet ihm gegenüber ab. Damit ist ein Austreten von Flüssigkeit unterbunden.

Nach einer weiteren vorteilhaften Ausgestaltungsform der Erfindung hat die Zubereitungseinrichtung bevorzugt zwei Teilausläufe, die in "H-Form" angeordnet sind. Der Flüssigkeitszulauf befindet sich in der Mitte des Querbalkens des "H". Die beiden vertikalen Seitenbalken symbolisieren die beiden Teilausläufe, wobei im unteren Bereich der Seitenbalken zuunterst die Auslauföffnungen und darüber die ersten Ausgleichskammern angeordnet sind. Letztere sind über die Drosselbohrung mit den im oberen Bereich der Seitenbalken befindlichen zweiten Ausgleichskammern verbunden. Die beiden Seitenbalken, d.h. die Teilausläufe, sind dabei so weit bzw. nah beabstandet angeordnet, dass die Flüssigkeit aus beiden Ausläufen einerseits in ein einzelnes Trinkgefäß auslaufen kann. Andererseits lassen sich auch gleichzeitig zwei separate Trinkgefäße aus jeweils einem Teilauslauf befüllen.

Nach einer weiteren vorteilhaften Ausgestaltungsform der Erfindung sind die Teilauslauföffnungen einer erfindungsgemäßen Zubereitungseinrichtung mit einem Verteilerkreuz ausgestattet. Dieses zentriert den Flüssigkeitsausfluss und sorgt somit für ein gleichmäßiges und gerichtetes Abfließen.

Nach einer weiteren vorteilhaften Ausgestaltungsform der Erfindung bestehen die Ausgleichskammern bevorzugt aus Silikon und der Zulauf aus einem Thermoplast. Diese Werkstoffe sind vorteilhafterweise geschmacks- und geruchneutral. Zudem lassen sich unter Verwendung von Silikon die Ausgleichskammern mit geringem Aufwand fertigen. Vorzugsweise können beide Ausgleichskammern mit den entsprechenden Drosselbohrungen bzw. der Aussparung für ein Ventil sowie die Steckanschlüsse zum Kopplungselement und zur Teilauslauföffnung aus einem Stück geformt sein. Mit diesem nahezu vollständigen Teilauslauf müssen nun lediglich das Kopplungselement und die Auslauföffnung beispielsweise über eine Steckverbindung zusammengefügt werden, was die Produktion weiter vereinfacht.

Das Prinzip der Erfindung wird im Folgenden anhand einer Zeichnung beispielshalber noch näher erläutert.

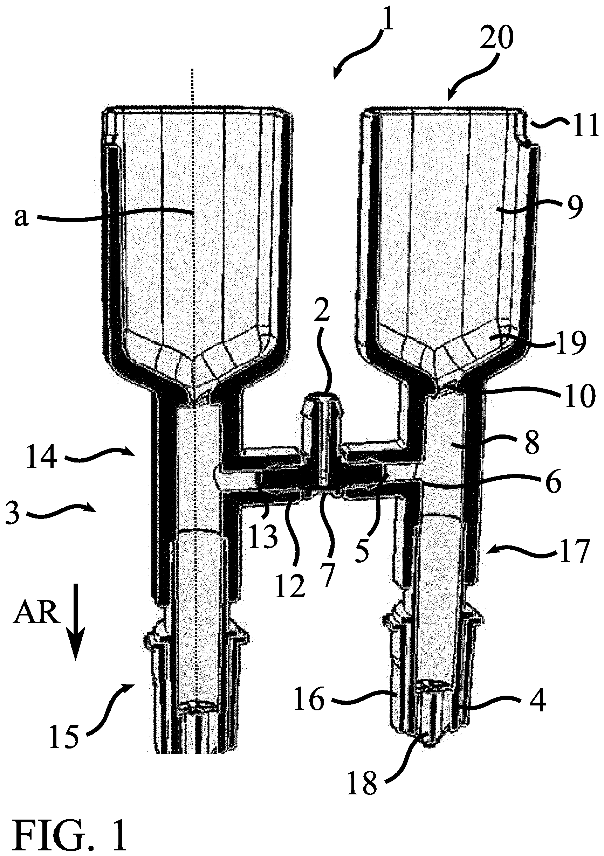

In der Zeichnung zeigt die einzige Figur 1 eine schematische Schnittdarstellung eines Ausführungsbeispiels eines Getränkeauslaufs 1 einer erfindungsgemäßen Zubereitungseinrichtung. Ein Zulauf 2 mit kreisförmigem Querschnitt wird von einer in Auslaufrichtung AR stromauf angeordneten und nicht dargestellten Brüheinrichtung mit einem Heißgetränk beliefert. Er ist Bestandteil eines umgekehrt T-förmigen Kopplungselements 7 aus einem Thermoplast, beispielsweise Polypropylen, Polyamid oder POM. Das Kopplungselement 7 verbindet den Zulauf 2 mit zwei beidseits des Kopplungselements 7 angeordneten Teilausläufen 3, die aus Silikon oder beispielsweise TPE. Dazu läuft das Kopplungselement 7 an seinem horizontalen Querschenkel in zwei Spitzenden 13 aus. Sie ragen in zwei Steckanschlüsse 12 hinein, die jeweils senkrecht von den Teilausläufen 3 abstehen und die die Spitzenden 13 nach der Art eines Rohrexpanders aufweiten. Damit entsteht eine erste stufenförmige Vergrößerung 5 des Durchflussquerschnitts.

Die Steckanschlüsse 12 haben einen kreisförmigen Querschnitt und münden in eine erste, zylindrische und rohrförmige Ausgleichskammer 8. Sie treffen dabei mittig und senkrecht auf eine in Ausflussrichtung AR verlaufende Längsachse a der jeweiligen ersten Ausgleichskammer 8. An der Mündung der Steckanschlüsse 12 in die Ausgleichskammer 8 kommt es zu einer zweiten stufenförmigen Vergrößerung 6 des Durchflussquerschnitts.

Die erste Ausgleichskammer 8 teilt sich in einen oberen Abschnitt 14 und einen unteren Abschnitt 15 mit demselben Durchmesser wie der obere Abschnitt 14. Der untere Abschnitt 15 ist aus einem separaten zylindrischen Bauteil aus Hartkunststoff ausgebildet, nämlich als Endspitze 16, die über eine Steckverbindung 17 an den oberen Abschnitt 14 aus Silikon stufenlos anschließt. Die erste Ausgleichskammer 8 mündet in Auslaufrichtung AR jeweils in einer Auslauföffnung 4 in der Endspitze 16, die dort ein Auslaufkreuz 18 enthält. Das Auslaufkreuz 18 verringert den Durchflussquerschnitt der ersten Ausgleichskammer 8.

Entgegen der Auslaufrichtung AR ist die erste Ausgleichskammer 8 über eine erste Drosselbohrung 10 jeweils mit einer zweiten Ausgleichskammer 9 verbunden. Die Drosselbohrung hat einen Durchmesser von mindestens 3,5 mm, damit auch feine Blasen sie passieren können. Die zweiten Ausgleichskammer 9 ist einstückig mit dem oberen Abschnitt 14 der ersten Ausgleichskammer 8 und damit ebenfalls aus Silikon ausgebildet. Die zweiten Ausgleichskammer 9 ist symmetrisch zur Längsachse a, im Wesentlichen quaderförmig mit abgerundeten Kanten und einer in Auslaufrichtung AR doppelt abgeschrägten Grundfläche 19 geformt und an ihrer Oberseite 20 mit einem nicht dargestellten Deckel verschlossen. Eine zweite Drosselbohrung 11 befindet sich jeweils im Bereich der der Grundfläche 19 gegenüber liegenden Oberseite 20 der zweiten Ausgleichskammern 9. Der Durchmesser der zweiten Drosselbohrung 11 beträgt maximal 1 bis 1,5 mm und ist gerade so groß, dass zwar Luft, aber keine Crema entweichen kann. Sie lässt Luft einströmen, um einen Unterdruck beim Auslaufen des Heißgetränks aus den Ausgleichskammern 8 zu vermeiden.

Das in der nicht dargestellten Brüheinheit zubereitete Heißgetränk gelangt über den Zulauf 2 durch das Kopplungselement 3 und die Steckanschlüsse 12 in die erste Ausgleichskammer 8. Die auf diesem Fließweg passierten Durchmesseränderungen bestehen in zwei stufenweisen Vergrößerungen 5, 6, die eventuelle unerwünschte große Blasen vernichten. Denn an den Stufen bildenden Vergrößerungen 5, 6 wird den unerwünschten großen Blasen die Möglichkeit zum Anhaften an den Wandungen der Steckanschlüsse 12 oder der ersten Ausgleichskammer 8 genommen, was zu ihrem Zerplatzen führt. Sie treten damit auch an den Auslauföffnungen 4 nicht mehr auf, wo ihr Zerplatzen nicht nur einen unschönen optischen Eindruck hinterlässt, sondern auch zu einem Verspritzen einer Gerätefont im Bereich des Getränkeauslasses 1 führen kann.

In der ersten Ausgleichskammer 8 staut sich das Getränk vor der Auslauföffnung 4 infolge des Auslaufkreuzes 18. Auch bei ungleichmäßiger Förderung des Heißgetränks aus der Brüheinheit kann damit eine gleichmäßige Abgabe von Heißgetränk aus dem Getränkeauslauf 1 erreicht werden, dessen Fluss nicht abreißt. Angestrebt wird dafür ein Flüssigkeitsbad von ca. 5mm Höhe in der ersten Ausgleichskammer 8. Aufgrund der Dichteunterschiede der einzelnen Bestandteile kommt es dabei außerdem zu einer Phasenseparierung des Heißgetränks. Zunächst fließt die dichtere Flüssigkeit ab, während sich darüber die Crema sammelt und eventuelle leichtere Blasen sogar noch weiter aufsteigen. Das Getränk fließt somit in seiner trink- bzw. servierfertigen Schichtung aus. Zudem wird eine Blockade der Teilausläufe 3 durch große Blasen verhindert, die zu einem ungleichmäßigen Auslaufen und gegebenenfalls zu unterschiedlichen Füllhöhen in den Trinkgefäßen führen würde. Durch die monotone Vergrößerung des Durchflussquerschnitts im Fließweg des Heißgetränks wird zudem eine Druckerhöhung vermieden und somit bestmögliche Qualität der Crema gewährleistet.

Die zweite Ausgleichskammer 9 dient als Überlaufschutz der ersten Ausgleichskammer 8. Staut sich die Flüssigkeit in der ersten Ausgleichskammer 8 zu hoch, wird die zweite Ausgleichskammer 9 als zusätzlicher Zwischenspeicher genutzt. Bei sinkendem Flüssigkeitsstand in der ersten Ausgleichskammer 8, kann dann auch die Flüssigkeit aus der zweiten Ausgleichskammer 9 wieder in die erste zurückfließen, wobei ein vollständiges Abfließen durch die abgerundeten Kanten und die abgeschrägte Grundfläche 19 gewährleistet wird. Die zweite Drosselbohrung 11 in der zweiten Ausgleichskammer 9 ermöglicht es, das Gasvolumen zu entlassen, das durch die sich anstauende Flüssigkeit verdrängt wird, sodass lediglich der Druck der umgebenden Atmosphäre herrscht. Dabei kann in diese Bohrung 11 auch ein Ventil eingesetzt sein, welches das Austreten von Flüssigkeit verhindert. Eine erfindungsgemäße Zubereitungseinrichtung gestattet also auf Basis ihrer Auslaufgeometrie, bestmögliche Getränkequalität bei gleichmäßigem Ausfließen des Getränks und gleichzeitigem Schutz der Maschine.

Es wird abschließend noch einmal darauf hingewiesen, dass es sich bei der vorhergehend detailliert beschriebenen Einrichtung lediglich um ein Ausführungsbeispiel handelt, welches vom Fachmann in verschiedenster Weise modifiziert werden kann, ohne den Bereich der Erfindung zu verlassen.

### Bezugszeichenliste:

- 1: Getränkeauslaufs
- 2: Zulauf
- 3: Teilausläufen
- 4: Auslauföffnung
- 5: erste Vergrößerung
- 6: zweite Vergrößerung
- 7: Kopplungselement
- 8: erste Ausgleichskammer
- 9: zweite Ausgleichskammer
- 10: erste Drosselbohrung
- 11: zweite Drosselbohrung
- 12: Steckanschluss
- 13: Spitzende
- 14: oberer Abschnitt
- 15: unterer Abschnitt
- 16: Endspitze
- 17: Steckverbindung
- 18: Auslaufkreuz
- 19: doppelt abgeschrägte Grundfläche
- 20: Oberseite

- AR: Auslaufrichtung
- A: Längsachse

## Patentansprüche

1. Heißgetränkezubereitungseinrichtung für Haushaltszwecke, insbesondere Kaffeevollautomat, umfassend einen Auslauf (1), welcher einen Zulauf (2) und eine Anzahl von Teilausläufen (3) umfasst, wobei die Teilausläufe (3)
- den Zulauf (2) mit je einer Teilauslauföffnung (4) fluidisch verbinden, und
- jeweils in Richtung ihrer Teilauslauföffnung (4) bis zu der Teilauslauföffnung (4) einen monoton zunehmenden Querschnitt aufweisen und die Vergrößerung (5; 6) des Querschnitts insbesondere stufenförmig erfolgt
und wobei die Teilausläufe (3)
- eine erste Ausgleichskammer (8) zur Phasenseparierung umfassen, die zwischen dem Zulauf (2) und dem Teilauslauf (3) angeordnet und mit diesen fluidisch verbunden ist, sowie
- eine zweite Ausgleichskammer (9) als Überlaufreservoir der ersten Ausgleichskammer (8) umfassen, die über eine Drosselbohrung (10) so mit der ersten Ausgleichskammer (8) verbunden ist, dass eine Flüssigkeit aus der zweiten Ausgleichskammer (9) in die erste Ausgleichskammer (8) abfließen kann.

2. Zubereitungseinrichtung nach Anspruch 1, wobei der Vergrößerungsfaktor bei einer stufenweisen Vergrößerung des Querschnitts mindestens 10% beträgt.

3. Zubereitungseinrichtung nach Anspruch 1 oder 2, wobei ein Kopplungselement (7) den Zulauf (2) mit dem jeweiligen Teilauslauf (3) so verbindet, dass zwischen Kopplungselement (7) und Teilauslauf (3) eine stufenförmige Vergrößerung (5) des Querschnitts ausgebildet ist.

4. Zubereitungseinrichtung nach Anspruch 1, wobei die zweite Ausgleichskammer (9) eine zweite Drosselbohrung (11) aufweist, die zum Druckausgleich mit der Umgebung ausgebildet ist.

5. Zubereitungseinrichtung nach Anspruch 1, wobei die zweite Ausgleichskammer (9) ein Schwimmerventil aufweist, das zum Druckausgleich mit der Umgebung ausgebildet ist und für Flüssigkeiten sperrt.

6. Zubereitungseinrichtung nach einem der vorhergehenden Ansprüche mit zwei Teilausläufen (3), wobei die Teilausläufe (3) in H-Form angeordnet sind.

7. Zubereitungseinrichtung nach einem der vorhergehenden Ansprüche, wobei die Teilauslauföffnungen (4) mit einem Verteilerkreuz (18) ausgestattet sind.

8. Zubereitungseinrichtung nach einem der vorhergehenden Ansprüche, wobei die Ausgleichskammern (8, 9) aus Silikon und der Zulauf (2) aus einem Thermoplast bestehen.

## Claims

1. Hot beverage preparation device for domestic use, in particular fully automatic coffee maker, comprising an outlet (1) which comprises an inlet (2) and a number of sub-outlets (3), wherein the sub-outlets (3)
- connect the inlet (2) fluidically with each sub-outlet opening (4), and
- in each case have a monotonously increasing cross-section in the direction of its sub-outlet opening (4) up to the sub-outlet opening (4) and the enlargement (5; 6) of the cross-section takes place in particular in steps
and wherein the sub-outlets (3)
- comprise a first equalisation chamber (8) for phase separation, which is arranged between the inlet (2) and the sub-outlet (3) and is fluidically connected herewith, and
- a second equalisation chamber (9) as an overflow reservoir of the first equalisation chamber (8), which is connected by way of a throttle hole (10) with the first equalisation chamber (8) such that a liquid can flow out of the second equalisation chamber (9) into the first equalisation chamber (8).

2. Preparation device according to claim 1, wherein the enlargement factor amounts to at least 10% with a step-by-step enlargement of the cross-section.

3. Preparation device according to claim 1 or 2, wherein a coupling element (7) connects the inlet (2) to the respective sub-outlet (3) such that a stepped enlargement (5) of the cross-section is embodied between the coupling element (7) and the sub-outlet (3).

4. Preparation device according to claim 1, wherein the second equalisation chamber (9) has a second throttle hole (11) which is embodied for pressure equalisation with the environment.

5. Preparation device according to claim 1, wherein the second equalisation chamber (9) has a flotation valve, which is embodied for pressure equalisation with the environment and blocks for liquids.

6. Preparation device according to one of the preceding claims with two sub-outlets (3), wherein the sub-outlets (3) are arranged in an H shape.

7. Preparation device according to one of the preceding claims, wherein the sub-outlet openings (4) are equipped with a distribution loop (18).

8. Preparation device according to one of the preceding claims, wherein the equalisation chambers (8, 9) consist of silicone and the inlet (2) consists of a thermoplast.

## Revendications

1. Dispositif de préparation de boisson chaude à usage domestique, en particulier distributeur de café entièrement automatique, comportant un orifice d'écoulement (1) qui comporte une arrivée (2) et une pluralité de sorties partielles (3), dans lequel les sorties partielles (3)
- relient l'arrivée (2) de façon fluidique, chacune à une ouverture de sortie partielle (4), et
- présentent chacune en direction de leur ouverture de sortie partielle (4), jusqu'à l'ouverture de sortie partielle (4), une section à accroissement monotone, et l'accroissement (5 ; 6) de la section étant en particulier en paliers
et dans lequel les sorties partielles (3)
- comportent une première chambre de compensation (8) pour la séparation des phases, qui est disposée entre l'arrivée (2) et la sortie partielle (3) et qui est reliée de façon fluidique à celle-ci, ainsi que
- comportent une deuxième chambre de compensation (9) en tant que réservoir de débordement de la première chambre de compensation (8), qui est reliée par l'intermédiaire d'un orifice d'étranglement (10) à la première chambre de compensation (8) de telle sorte qu'un liquide puisse s'écouler de la deuxième chambre de compensation (9) dans la première chambre de compensation (8).

2. Dispositif de préparation selon la revendication 1, dans lequel le facteur d'accroissement dans un accroissement en paliers de la section est d'au moins 10 %.

3. Dispositif de préparation selon la revendication 1 ou la revendication 2, dans lequel un élément d'accouplement (7) relie l'arrivée (2) à chaque sortie partielle (3) de sorte qu'entre l'élément d'accouplement (7) et la sortie partielle (3) soit constitué un accroissement en paliers (5) de la section.

4. Dispositif de préparation selon la revendication 1, dans lequel la deuxième chambre de compensation (9) comprend un deuxième orifice d'étranglement (11) qui est constitué pour l'équilibrage de pression avec l'environnement.

5. Dispositif de préparation selon la revendication 1, dans lequel la deuxième chambre de compensation (9) comprend une soupape à flotteur qui est constituée pour l'équilibrage de pression avec l'environnement et qui bloque les liquides.

6. Dispositif de préparation selon l'une des revendications précédentes avec deux sorties partielles (3), dans lequel les sorties partielles (3) sont disposées en forme de H.

7. Dispositif de préparation selon l'une des revendications précédentes, dans lequel les ouvertures de sortie partielle (4) sont pourvues d'un répartiteur à croisillon (18).

8. Dispositif de préparation selon l'une des revendications précédentes, dans lequel les chambres de compensation (8, 9) sont en silicone et l'arrivée (2) est en une matière thermoplastique.
